Europäisches Patentamt

European Patent Office

Office européen des brevets

(19)

(11) Publication number: **0 100 565**
**A1**

(12) # EUROPEAN PATENT APPLICATION

(21) Application number: **83200793.4**

(22) Date of filing: **02.06.83**

(51) Int. Cl.³: **A 47 J 36/12**
**A 47 J 36/08**

(30) Priority: **04.06.82 NL 8202276**

(43) Date of publication of application:
**15.02.84 Bulletin 84/7**

(84) Designated Contracting States:
**AT BE CH DE FR GB IT LI LU NL SE**

(71) Applicant: **Bruijn, Nicolaas Leendert**
**31 Vesuvius**
**NL-1186 CL Amstelveen(NL)**

(72) Inventor: **Bruijn, Nicolaas Leendert**
**31 Vesuvius**
**NL-1186 CL Amstelveen(NL)**

(74) Representative: **van der Arend, Adrianus G.A., Ir. et al,**
**EXTERPATENT Willem Witsenplein 4**
**NL-2596 BK 's-Gravenhage(NL)**

(54) Means destined to safely pour off a liquid from a container closeable by a lid.

(57) This invention relates to displacing means which, in conjunction with a container 5a..5d; 10; 16 and a lid 6a..6d; 12; 17 therefore, is able to form a slot-shaped passage between the lower edge of the lid and the upper edge of an opening of the container opposite said lid, so enabling a liquid 9a..9d present within the container to be easily poured off through said passage while tilting said lid on top of the container without any undesired shifting of the lid with respect to the opening.

The displacement means are suitable for use with various kinds of container/lid combinations while obtaining a passage, having adjustable dimensions.

*FIG: 2.*

EP 0 100 565 A1

- 1 -

MEANS DESTINED TO SAFELY POUR OFF A LIQUID FROM A
CONTAINER CLOSEABLE BY A LID

BACKGROUND OF THE INVENTION

1. Field of the Invention

The present invention aims to solve difficulties arising
when a liquid has to be poured off through a passage formed
between the upper edge of an opening of a container, to be
brought into an inclined position, and a lid disposed on
said opening. In case that no pouring off has to take place,
said lid may close the opening in a centering manner by
centering means, causing said lid to be substantially supported on said edge of the container in an unslideable way.

The container may be a stwe-pan, a jug or a jar or pot,
to be used for housekeeping purposes.

2. Description of the Prior Art

To pour off the liquid, in practice the lid has to be
disengaged and somewhat inclined from the centering position with respect to the container and partially slipped across the edge of the opening of the container. At both sides of the inclination, with respect to the axis of the lid, a passage is thereby formed between the opposite edges of the lid and the container. Dependent upon a, substantially personal, preference, one or the other passage is used for the pouring action. In both cases, however, the lid is no longer latched with respect to the container. Especially during the pouring action the latter is disadvantageous as the passage may obtain too small or too great dimensions, thus in the one case preventing a correct pouring action whilst in the other case other products than the liquid to be poured off will be lost from the container.

An undesirable displacement of the lid during the pouring action is also extremely inconvenient as undesired vapors such as steam, may suddenly escape from the container in too great quantities which is the more disadvantageous in case that the liquid and/or the vapors possess a high temperature; it has been found in practice that the latter may cause burnt hands.

SUMMARY OF THE INVENTION

The present invention aims to provide a solution to these problems.

According to the invention means are therefore provided destined to pour off a liquid being present in a container, said means co-operating with said container and a lid for closing an upper opening of said container, said means comprising a displacement or spacing element to form a passage between the edge of the opening of the container and the edge of the lid, the dimensions of said passage being dependent on the position and the outline of the displacement element, while the element is supported between the container and the lid in such a manner, that a mutual centering action existing between the lid and the container, when the container is closed by the lid, is substantially maintained.

Means of this kind for pouring off a liquid present in a container cause the lid of the container to stay put or centered with respect to the opening of the container, resulting in an unslideable lid and unchangeable dimensions of the passage.

Both sides of the container being provided with grips and the center-top of the lid with a, for example knob-shaped, grip will provide an easy pouring off without any risk of burning the hands, as a slight thumb pressure upon the grip of the lid will be sufficient. The directions of the forces to be executed upon the lid are thereby not critical.

The displacement element according to the invention may consist of a removable unique supporting element having a substantially U-shaped cross section, which element may be positioned on the edge of the opening of the container, the legs extending downwardly from said edge, the leg extending inside the container and/or the connection interconnecting the legs, supporting the lid while forming the passage.

The dimensions and shape of the supporting element are such, that the latter can be employed for various different embodiments of the container and the lid . This may be

- 4 -

achieved in accordance with the invention in that said one leg is subdivided into an uneven number of spaced divisional legs, whereas the other leg is subdivided into an even number of spaced divisional legs situated opposite the separating spaces between the divisional legs of the one leg. It will be appreciated that in case that the uneven number equals one and the even number two, the lower edge of the lid may abut a relatively small, great portion, respectively of the supporting means, thus allowing a selection between two slots or passages having different dimensions.

Providing the supporting element with longitudinal parallel and preverably subdivided legs, allows a universal use for a great variety of container/ lid combinations, having a relatively great but safe adjustable passage or slot for the liquid to be poured off.

In order to obtain a passage with selectable dimensions the dimension of one leg toward the other leg may also be embodied in a manner different from that of the other leg. For that purpose the longitudinal axis of the one leg may e.g. be rotated and/or provided with a rib-shaped thickening on the outside of the supporting element, while also the top side of the part connecting the opposite leg(s) may be thicker locally.

Preferably the leg connecting part is provided with an abutment for the lid at the side opposite the legs. Said abutment is an additional safeguard against a displacement of the lid, if any, dependent upon the embodiment of the means centering the lid with respect to the container and may also serve as a grip.

The displacement element may also be constituted by at least one projection formed at the lower edge of the lid, the upper edge of the container opening respectively, which projection can be accommodated within a recess formed in the edge of the container opening, the edge of the lid, respectively.

The advantage of such a displacement element is that it can be produced simultaneously with the container and the lid, with dimensions adapted to the specific container and lid. Forming two projection/recess pairs will strongly prevent a shifting, if any, of the lid during the pouring off action.

The displacement/element may also be formed by placing a catch element on an axis radial through the container, the lid respectively such, that a supporting surface thereof will support the lid, the container respectively, while forming the passage.

Such a displacement element may be produced together and in conjunction with the container, lid respectively and may thus be adapted to the specific dimensions of the container/lid combination.

Preferably the catch element is detachably connected with the container, lid respectively. This may be effected by fixing a pin to the container, lid respectively, so that the catch element can be slid across the pin. An advantage of the detachable catch element is that said element can be used for a plurality of container/lid combinations, while it cannot possibly be damaged by fire or the like in case of heating the container/lid when it is removed therefrom.

Preferably the catch element is provided with a plurality of selectable supporting surfaces, so that with just
one catch element passages with selectable dimensions may be
obtained.


DESCRIPTION OF THE DRAWINGS

FIG. 1 is a first embodiment of a displacement element
according to the invention;

FIGS. 2-5 are sectional views illustrating the use of
a displacement element of fig. 1, for a plurality of various
container/lid combinations;

FIG. 6 is a view of a container/lid combination provided
with a displacement element according to the invention in
another embodiment; and

FIG. 7 is a view of a container/lid combination provided
with a displacement element according to the invention in
yet another embodiment, while

FIG. 8 is a top view of an alternative embodiment of the
displacement element of fig. 7.


DESCRIPTION OF THE PREFERRED EMBODIMENTS

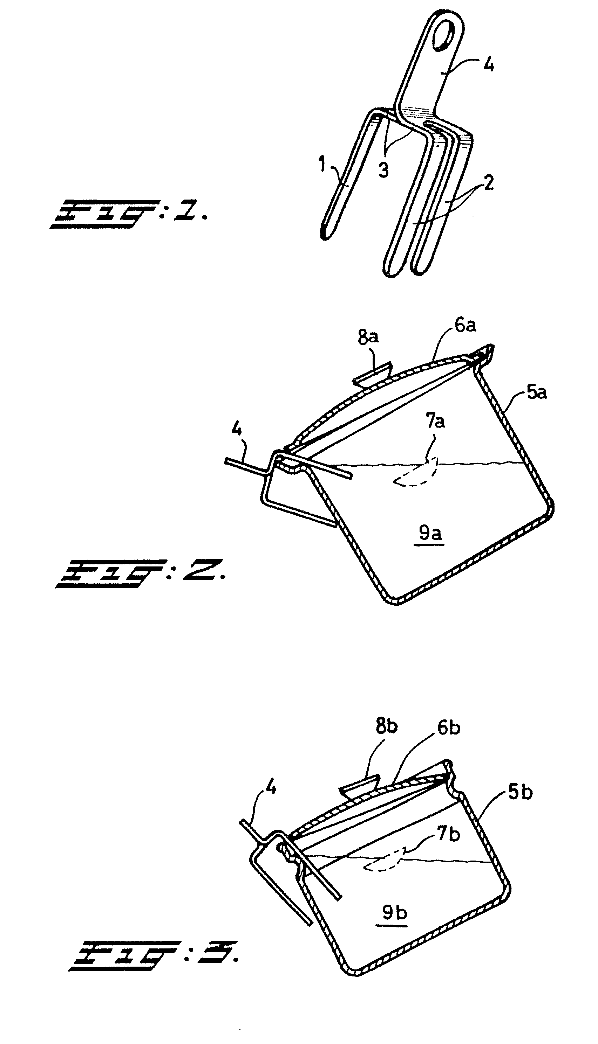

The displacement element as illustrated in fig. 1 may
be produced from a strip of flat material by means of a
stamp and a die, in such manner that it has a substantial U-
shape with a leg 1, two legs 2 opposite leg 1, a part 3 interconnecting the legs 1, 2 and an abutment 4 extending from the
connecting part 3 at the side opposite legs 1, 2 which abutment 4 may also function as a grip.

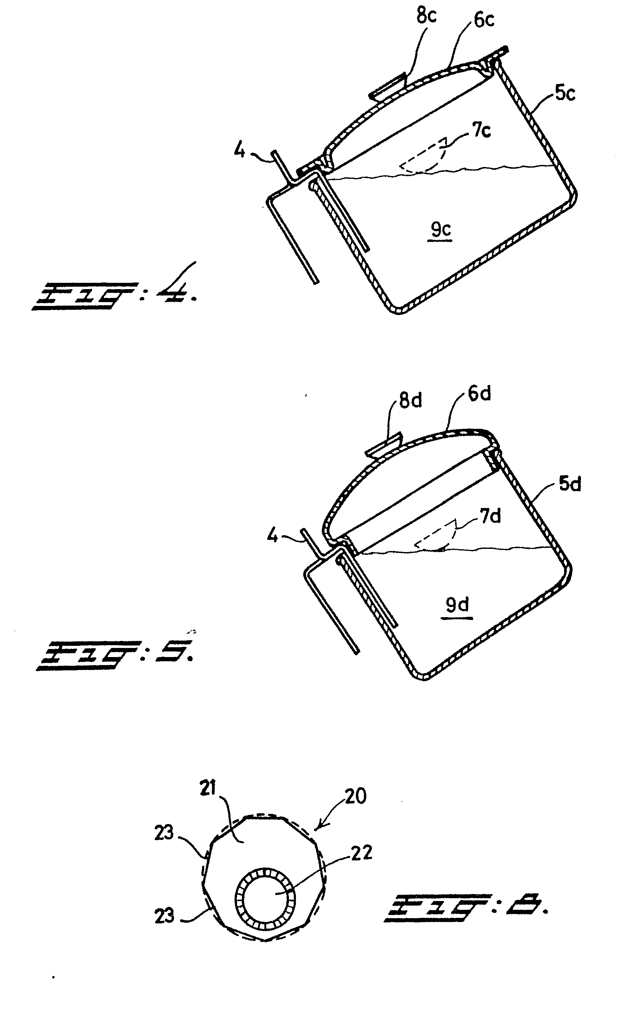

Figs. 2 to 5 illustrate various combinations of containers 5a....5d and lids 6a....6d. The edges of the openings of the containers and of the respective lids are so embodied that they form centering means, so that a lid is capable of closing the opening of the respective container in a substantially undisplaceable manner.

The upright walls of each of the containers 5a....5d are provided with two grips 7a....7d opposite each other. The lids 6a....6d are each provided with a central knob-shaped grip 8a....8d. The containers 5a....5d contain a liquid 9a....9d to be poured off.

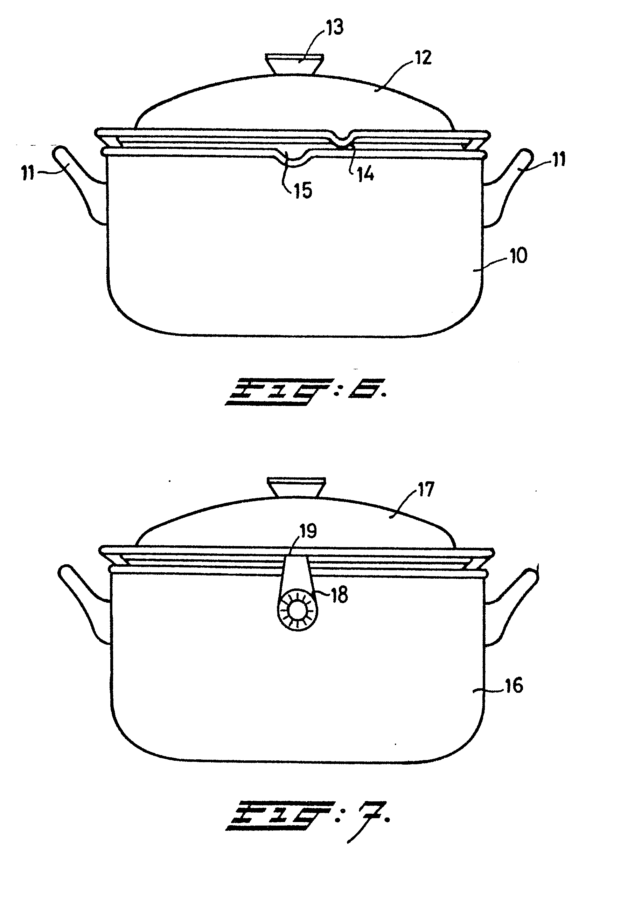

With the combinations as illustrated in figs. 2 and 3 a displacement element (illustrated in fig. 1) is positioned in a first position for forming a passage between the upper edge of the container 5a, 5b and the edge of the lid 6a, 6b. The edge of the lid 6a, 6b is then supported on the legs 1 or 2 of the displacement element. By seizing containers 5a, 5b via the grips 7a, 7b and exerting a slight force upon grip 8a, 8b respectively, for instance by means of the thumbs of both hands, lid 6a, 6b is pressed in the area of the displacement element, against one of the legs of the latter, whereby in the region of the displacement element a passage is formed between container 5a, 5b and lid 6a, 6b. Since lid 6a, 6b thereby remains substantially within the aforementioned centering means, liquid 9a, 9b can be poured off from container 5a, 5b through the passage without any risk of a displacement of lid 6a, 6b and/or of burning the hands.

The embodiment of the centering means constituted by the edges of the container/lid combinations (illustrated in figs 4 and 5) is such, that preferably the displacement element is used in the second position as illustrated. Said position enables abutment 4, which may also function as a grip, to prevent an unwanted great displacement of lid 6c, 6d and a too great passage inherent therewith, in case that container 5c, 5d might occupy a relatively extremely inclined position and a faulty handling of the combination or in case that an inappropriate centering action of the centering means will cause the edge of lid 6c, 6d to shift beyond the supporting surface of the connecting part at the level of the displacement element.

To obtain a passage with selectable dimensions the displacement element (as illustrated in fig. 1) may locally have several different thicknesses/projections, respectively. For that purpose the legs 1 and/or 2 may be provided with longitudinally extending ribs, while also an embodiment is possible whereby legs 1 and/or 2 have been rotated along their respective longitudinal axes, which may be effected such that in said longitudinal direction, this corresponds to variable thicknesses. The thickenings, projections, respectively, may furthermore be such, that they extend in the longitudinal direction of the legs in a teeth-shaped manner, thus providing an additional protection against a displacement, shifting, respectively, of lid 6a, 6b.

Fig. 6 illustrates a view of a container 10 comprising grips 11 and a lid 12 disposed thereupon comprising a knob-shaped grip 13. Although different embodiments are also possible, the cross-section of the container/lid combination 10, 12 as illustrated, corresponds to that of the combination 5c, 6c(see fig. 4). The combination 10, 12 comprises a lid edge having locally been set downwardly, thus forming a projection 14 which may be accommodated in a recess 15 of the edge of the container 10 having been formed by a downward impression of the edge of the container 10. In case that no liquid need to be poured off from the container 10 and lid 12 having to close the opening of container 10, lid 12 will be so turned with respect to container 10 that projection 14 is accommodated in recess 15. A slight turning of lid 12 in the plane of the opening of container 10 will cause a passage between the edge of lid 12 and the edge of container 10, so allowing liquid to be poured off.

Any unwanted shifting of lid 12 beyond the edge of container 10, is prevented by preferably providing the container/lid combination 10, 12 with small equidistant pairs of projections/recesses 14, 15.

Said projections and/or recesses may also be produced in various different embodiments whilst their direction may also be opposite to that as illustrated.

Fig. 7 illustrates another embodiment of a displacement element according to the invention, to be used in a container/lid combination 16, 17, the displacement element being formed by a catch element 18 to be positioned about an axis radial through container 16, said catch element comprising a supporting surface 19 which, in the illustrated position, lifts the edge of lid 17 from the edge of container 16, thus providing a passage between those edges. During the pouring action the lid 17 in combination 16, 17 will also remain substantially centered, preventing any shifting, displacement respectively of the same and so maintaining a passage having the desired dimensions and decreasing any risk of burning the hands.

The catch element 18 may be pivotably fixed about the aforementioned axis of the container 16, the supporting surface 19 being rotated from a lower toward the highest position as illustrated, in order to obtain the desired passage. The catch element 18 may also be fixed to the container 16 in a detachable way. This can be realized in various manners, for instance, by providing container 16 with a radially extending pin and catch element 18 with a passage to dispose said element along said pin.

A passage with selectable dimensions can also be obtained by using a catch element comprising a plurality of selectable supporting surfaces instead of the catch element as illustrated in fig. 7. Each supporting surface may then support the edge of lid 17. Fig. 8 illustrates a top view of an embodiment of a similar catch element. Catch element 20 as shown consists of a polygonal disk 21 and a grip 22 disposed eccentrically with respect to the center of disk 21, the symmetrical axis of the grip 22 corresponding to the axis of the catch element 18 (as illustrated in fig. 7). The polygonal disk 21 comprises a plurality of supporting surfaces 23 which may each support lid 17 by a suitable position of grip 22 with respect to the axis through the container 16. The catch element 20 may also be fixed to the container 16 in a detachable manner.

The catch elements 18, 20 may also be fixed to lid 17, whether or not detachable, instead of to container 16, the supporting surface 19/23 of the catch element then being able to abut against a suitable part of the edge of container 16.

CLAIMS:

1. Means destined to pour off a liquid (9a..9d) being present in a container (5a..5d; 10; 16), said means co-operating with said container and with a lid (6a..6d; 12; 17) for closing an upper opening of said container, said means comprising a displacement or spacing element to form a passage between the edge of the opening of the container and the edge of the lid, the dimensions of said passage are dependent on the position and the outline of the displacement element, while the element is supported between the container and the lid, in such a manner, that a mutual centering action existing between the lid and the container, when the container is closed by the lid, is substantially maintained.

2. Means as claimed in claim 1, characterized in that the displacement element is constituted by a removable unique supporting element, having a substantially U-shaped cross section, which element may be positioned on the edge of the opening of the container (5a..5d), the legs (1, 2) extending downwards from said edge, the leg extending inside the container and/or the connecting part (3) interconnecting the legs supporting the lid (6a..6d) while forming the passage.

3. Means, as claimed in claim 2, characterized in that the one leg is subdivided into an uneven number of spaced divisional legs, whereas the other leg is subdivided into an even number of spaced divisional legs situated opposite the separating spaces between the divisional legs of said one leg.

4. Means as claimed in claim 2 or 3, characterized in that the dimension of one leg towards the other leg differs from that of the other leg.

5. Means as claimed in claim 1, 2 or 3, characterized in that at least one leg is rotated along its longitudinal axis.

6. Means as claimed in claim 1, 2, 3 or 4, characterized in that at least one leg is provided with a rib-shaped thickening on the outer side of the supporting element.

7. Means as claimed in one of the claims 2-6, characterized in that near one leg, the distance between the top of the connecting part (3) and the geometric connecting line between the inner corners formed between the respective legs and the connecting part, is greater than the similar distance near the other leg, providing different supporting levels for the lid (6a..6d).

8. Means as claimed in one of the claims 2-7, characterized in that at the side opposite the legs, the connecting part (3) is provided with an abutment (4) for the lid (6a..6d).

9. Means as claimed in claim 1, characterized in that the displacement element is formed by at least one projection (14) formed at the lower edge of the lid (12), upper edge of the container (10) opening respectively, which projection (14) can be accommodated within a recess (15) formed in the edge of the container (10) opening, the edge of the lid (12), respectively.

10. Means as claimed in claim 9, characterized in that the projection (14) is formed by a portion locally reset downwards, upwards, respectively, and/or a descending, respectively ascending extension of the edge of the lid, the container respectively.

11. Means as claimed in claim 1, characterized in that the displacement element is formed by placing a catch element (18, 20) on an axis radial through the container (16), the lid (17) respectively, such that a supporting surface (19, 23) thereof will support the lid (17), the container (16), respectively, while forming the passage.

12. Means as claimed in claim 11, characterized in that said catch element (18, 20) is detachably connected with the container (16), the lid (17) respectively.

13. Means as claimed in claim 11, characterized in that the catch element (20) comprises a plurality of selectable supporting surfaces (23).

*FIG : 1.*

*FIG : 2.*

*FIG : 3.*

Fig. 4.

Fig. 5.

Fig. 8.

_FIG: 6._

_FIG: 7._

European Patent Office

**EUROPEAN SEARCH REPORT**

**0100565**

Application number

EP 83 20 0793

## DOCUMENTS CONSIDERED TO BE RELEVANT

| Category | Citation of document with indication, where appropriate, of relevant passages | Relevant to claim |
|---|---|---|
| X | DE-C- 382 244 (SCHINDLER)<br><br>* Whole document * | 1,2,6,8 |
| X | US-A-3 952 374 (MOHOROVICH)<br>* Whole document * | 1,2,8 |
| X | US-A-1 619 573 (HAINES)<br>* Whole document * | 1,2,8 |
| X | DE-C- 514 534 (FRISTER AG)<br><br>* Figure 2; page 1, lines 49-61 * | 1,11,13 |
| X | GB-A- 278 095 (DANCY)<br>* Whole document * | 1,9 |

**CLASSIFICATION OF THE APPLICATION (Int. Cl. ³)**

A 47 J 36/12
A 47 J 36/08

**TECHNICAL FIELDS SEARCHED (Int. Cl. ³)**

A 47 J

The present search report has been drawn up for all claims

| Place of search | Date of completion of the search | Examiner |
|---|---|---|
| THE HAGUE | 01-09-1983 | SCHARTZ J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82